(19) Europäisches Patentamt / European Patent Office / Office européen des brevets

(11) **EP 4 566 767 A1**

(12) **DEMANDE DE BREVET EUROPEEN**

(43) Date de publication:
**11.06.2025 Bulletin 2025/24**

(21) Numéro de dépôt: **24217354.0**

(22) Date de dépôt: **04.12.2024**

(51) Classification Internationale des Brevets (IPC):
**B25J 9/16** *(2006.01)*

(52) Classification Coopérative des Brevets (CPC):
**B25J 9/1692;** G05B 2219/39024

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **05.12.2023 FR 2313581**

(71) Demandeur: **Exel Industries**
**51200 Epernay (FR)**

(72) Inventeurs:
• **CHEVRON, Didier**
**38430 Moirans (FR)**
• **PALACIO, Juan**
**38000 Grenoble (FR)**
• **CHOUAN, Nicolas**
**38580 Allevard-les-Bains (FR)**

(74) Mandataire: **Lavoix**
**62, rue de Bonnel**
**69448 Lyon Cedex 03 (FR)**

(54) **MÉTHODE DE CALIBRATION D'UN ROBOT MULTIAXE ÉQUIPÉ D'UNE CAMÉRA ET D'UNE TÊTE D'IMPRESSION ET ROBOT CONFIGURÉ POUR LA MISE EN OEUVRE D'UNE TELLE MÉTHODE**

(57) Selon cette méthode, on détermine (104) une surface mathématique ( $P_{ref}^{BF}$ ), on amène une tête d'impression dans une première puis dans une deuxième position, où on imprime (106, 110) un premier impact et un deuxième impact, puis on mesure (108, 112) les coordonnées d'un point caractéristique ( $P_{1,4}^{BF}, P_{2,4}^{BF}$ ) du premier ou deuxième impact. On exprime (114) les coordonnées d'un premier point d'intersection ( $I_{1,4}^{BF}$ ) et celles d'un deuxième point d'intersection ( $I_{2,4}^{BF}$ ). On exprime (120) un écart ( $\overleftarrow{\varepsilon_k}$ ) basé sur les coordonnés des points caractéristique ( $P_{k,j}^{BF}$ ) et d'intersection ( $I_{k,j}^{BF}$ ). On construit (122) une fonction objective (F) dont les variables sont les écarts ( $\overleftarrow{\varepsilon_k}$ ). On détermine (124) des valeurs de six paramètres (X$_1$-X$_6$) d'une matrice de passage ( $T^{TCP \to PG}$ ) qui minimisent la fonction objective (F). On utilise (128) ces six paramètres (X$_1$-X$_6$) pour définir une position orientée du repère (TCP) lié à la tête d'impression dans le repère lié au poignet.

FIG.5

**Description**

La présente invention concerne une méthode de calibration d'un robot multiaxe associé à un repère de base et équipé d'une caméra et d'une tête d'impression.

Dans le domaine de l'application de produit de revêtement au moyen d'un robot multiaxe équipé d'une tête d'impression, il importe de pouvoir commander le fonctionnement de cette tête d'impression de façon précise, notamment en tenant compte du positionnement de cette tête d'impression par rapport à une surface à revêtir. Pour ce faire, il est connu d'équiper un robot multiaxe d'une caméra qui permet de repérer l'environnement du robot, notamment d'une surface à revêtir en regard de laquelle doit être positionnée la tête d'impression.

A ce jour, le fonctionnement d'un robot multiaxe équipé d'une tête d'impression repose sur le postulat que la position et l'orientation d'un repère orthogonal lié à la tête d'impression est connue par rapport à un repère lié au poignet du robot et à un repère de base fixe, lié à un local dans lequel est disposé le robot multiaxe. Or, la position exacte de ce repère lié à la tête d'impression dépend notamment de la façon et de la précision avec laquelle la tête d'impression est montée sur un poignet du robot.

Il est connu de FR3061076A1 de calibrer la position d'une tête d'impression montée sur un robot, avant chaque cycle de mise en oeuvre de cette tête d'impression, en effectuant une vérification automatique d'une position effective d'un point d'impression par rapport à un point de référence de la tête d'impression puis, si nécessaire, une correction d'un écart entre un point d'impression et un point de référence correspondant. Cette méthode est relativement complexe à mettre en oeuvre et l'enseignement de ce document ne permet pas d'optimiser la calibration.

D'autre part, DE102016204123A1 divulgue un procédé de marquage utilisant des étiquettes dans lequel un positionnement fin d'une tête d'impression est utilisé, sans qu'il soit explicite comment un tel positionnement fin peut être obtenu.

Il existe donc un besoin pour une méthode de calibration efficace d'un robot multiaxe équipé d'une caméra et d'une tête d'impression, une telle méthode devant permettre une mise en oeuvre facilitée et précise de la tête d'impression, sans être trop complexe ou nécessiter l'utilisation d'étiquettes.

A cet effet, l'invention concerne une méthode de calibration d'un robot multiaxe associé à un repère de base et équipé d'une caméra et d'une tête d'impression comprenant au moins une première buse, la caméra et la tête d'impression étant montées sur un poignet du robot multiaxe. Conformément à l'invention, cette méthode consiste à déterminer une position orientée d'un repère lié à la tête d'impression dans un repère lié au poignet, la position orientée du repère lié à la tête d'impression étant définie par six paramètres d'une matrice de passage entre le repère lié à la tête d'impression et le repère lié au poignet. La méthode comprend au moins les étapes suivantes consistant à :

a) viser avec la caméra au moins un point d'une surface fixe dans le repère fixe ;

b) déterminer, à partir du résultat de l'étape a), une surface mathématique représentative de la surface fixe ;

c) amener la tête d'impression dans une première position par rapport à la surface fixe, dans laquelle la tête d'impression est orientée vers la surface fixe ;

d) lorsque la tête d'impression est dans la première position, imprimer, sur la surface fixe et au moyen de la première buse, au moins un premier impact ;

e) mesurer à l'aide de la caméra, les coordonnées, dans le repère de base, d'un premier point caractéristique du premier impact ;

f) amener la tête d'impression dans au moins une deuxième position par rapport à la surface fixe, différente de la première position et dans laquelle la tête d'impression est orientée vers la surface fixe ;

g) lorsque la tête d'impression est dans la deuxième position, imprimer, sur la surface fixe et au moyen de la première buse, au moins un deuxième impact ;

h) mesurer, à l'aide de la caméra, les coordonnées, dans le repère de base, d'un deuxième point caractéristique du deuxième impact ;

i) exprimer, dans le repère de base BF et avec la matrice de passage, les coordonnées d'un premier point d'intersection entre la surface mathématique représentative de la surface fixe et une ligne passant par la première buse dans la première position ;

j) exprimer, dans le repère de base BF et avec la matrice de passage, les coordonnées d'un deuxième point d'intersection entre la surface mathématique représentative de la surface fixe et la ligne passant par la première buse dans la deuxième position ;

k) exprimer, pour chaque position de la tête d'impression et chaque impact, un écart basé sur les coordonnés de son point caractéristique et les coordonnées de son point d'intersection ;

l) construire une fonction objective dont les variables sont les écarts exprimés à l'étape k) ;

m) déterminer des valeurs des six paramètres de la matrice de passage qui minimisent la fonction objective ;

n) utiliser les six paramètres déterminés à l'étape m) pour définir la position orientée du repère lié à la tête d'impression dans le repère lié au poignet.

Les étapes de la méthode de l'invention permettent de définir la position orientée d'un repère lié à la tête d'impression dans le repère lié au poignet, ce qui permet un positionnement correct de la tête d'impression dans l'espace. En d'autres termes, l'invention permet de connaitre la position et l'orientation de la tête d'impression dans un repère lié au poignet du robot, alors que le modèle du robot permet de connaitre la position du poignet dans un repère de base, lié au local dans lequel est installé le robot. La méthode de l'invention permet donc un positionnement relatif précis entre la tête d'impression et une surface fixe, à revêtir par cette tête d'impression.

Selon des aspects avantageux mais non obligatoires de l'invention, une telle méthode peut incorporer une ou plusieurs des caractéristiques suivantes prises selon toutes combinaisons techniquement admissibles :

- lors de l'étape d) on imprime, sur la surface fixe et au moyen de la deuxième buse, un troisième impact;
- lors de l'étape e) on mesure, à l'aide de la caméra, les coordonnées, dans le repère de base, d'un troisième point caractéristique du troisième impact ;
- lors de l'étape g), on imprime, sur la surface fixe et au moyen de la deuxième buse, un quatrième impact ;
- lors de l'étape h), on mesure, à l'aide de la caméra, les coordonnées, dans le repère de base, d'un quatrième point caractéristique du quatrième impact ;
- lors de l'étape i) on exprime, dans le repère de base et avec la matrice de passage, les coordonnées d'un troisième point d'intersection entre la surface mathématique représentative de la surface fixe et une ligne passant par la deuxième buse dans la première position ;
- lors de l'étape j), on exprime, dans le repère de base et avec la matrice de passage, les coordonnées d'un quatrième point d'intersection entre la surface mathématique représentative de la surface fixe et la ligne passant par la deuxième buse dans la deuxième position.

- Un axe du repère lié à la tête d'impression est parallèle aux directions d'éjection des deux buses de la tête d'impression, alors que les deux buses sont disposées de part et d'autre et à égale distance d'une buse de référence de la tête d'impression par laquelle passe l'axe du repère lié à la tête d'impression.
- Les six paramètres de la matrice de passage se décomposent en trois paramètres de translation et trois paramètres de rotation et l'étape m) comprend des sous étapes consistant à :

   m1) déterminer les trois paramètres de rotation en minimisant la fonction objective construite à l'étape l)
   m2) exprimer, pour chaque position de la tête d'impression et chaque buse, un autre écart basé sur les coordonnés de son point caractéristique et les coordonnées de son point d'intersection, l'autre écart étant différent de celui exprimé à l'étape k) ;
   m3) construire une autre fonction objective, dont les variables sont les écarts exprimés à la sous-étape m2) ;
   m4) déterminer les trois paramètres de translation, en minimisant la fonction objective construite à l'étape m3)

- L'autre écart s'exprime sous la forme

$$\vec{a_k} = T^{TCP \to PG} \times \begin{bmatrix} 0 \\ 0 \\ 0 \\ 1 \end{bmatrix} - \frac{1}{2} \times \left( P_{k,j}^{BF} + P_{k,j}^{BF} \right)$$

ou sous la forme $$\vec{a_k} = \frac{1}{2} \times \left( I_{k,j}^{BF} + I_{k,j'}^{BF} \right) - \frac{1}{2} \times \left( P_{k,j}^{BF} + P_{k,j'}^{BF} \right)$$ où

- $\vec{a_k}$ est l'autre écart exprimé à la sous-étape m2) pour la position k
- $I_{k,j}^{BF}$ sont les coordonnées, dans le repère de base, du point d'intersection de la buse de rang j pour la position k
- $P_{k,j}^{BF}$ sont les coordonnées, dans le repère de base, du point caractéristique de l'impact imprimé avec la buse de rang j pour la position k
- $T^{TCP \to PG}$ est la matrice de passage du repère lié à la tête d'impression au repère lié au poignet ;
- $\begin{bmatrix} 0 \\ 0 \\ 0 \\ 1 \end{bmatrix}$ est l'expression du point d'origine du repère lié à la tête d'impression dans le repère lié à la tête d'impression.

- La méthode comprend une étape de correction du point d'origine du repère lié à la tête d'impression, mise en oeuvre entre les étapes m) et n) et consistant à :

  p1) placer la tête d'impression en regard de la surface fixe et perpendiculairement à la surface fixe, dans une position où le point d'origine du repère lié à la tête d'impression est dans la surface mathématique représentative de la surface fixe (S);

  p2) mesurer une distance entre la tête d'impression et la surface fixe ;

  p3) corriger les paramètres de translation en appliquant une translation selon l'axe des hauteurs du repère lié à la tête d'impression, de telle sorte que la distance mesurée à l'étape p2) soit égale à une distance prédéterminée

- Les étapes c) et d) sont mises en oeuvre avant l'étape e) et les étapes f) et g) sont mises en oeuvre avant l'étape h).
- Les premières et deuxièmes positions sont sélectionnées de façon arbitraire.
- La ou chaque fonction objective est la somme des carrés des écarts exprimés à l'étape k) et, éventuellement, à l'étape m2).
- La détermination des valeurs des six paramètres à l'étape m) est effectuée par résolution d'un système d'équations non-linéaire au moyen de dérivées partielles, à partir d'une position proche, selon la méthode des moindres carrés, la méthode de Newton, la méthode des gradients, la méthode de Levenberg-Marquardt, la méthode de Newton-Raphson, la méthode de la sécante, une méthode de dichotomie, une méthode itérative ou au moyen d'une discrétisation du domaine des six paramètres autour de la position proche et de l'évaluation de la fonction objective.
- Lors de l'étape i) et/ou j), l'expression des coordonnées des points d'intersection est obtenue par l'expression de l'intersection entre la surface mathématique représentative de la surface fixe et une ligne balistique issue de la buse correspondante.

Selon un autre aspect, l'invention concerne un robot multiaxe associé à un repère de base et équipé d'une caméra et d'une tête d'impression, la tête d'impression comprenant au moins une première buse, la caméra et la tête d'impression étant montées sur un poignet du robot multiaxe. Conformément à l'invention, ce robot comprend une unité électronique de commande configurée pour mettre en oeuvre une méthode de calibration telle que décrite précédemment.

Ce robot induit les mêmes avantages que la méthode de l'invention.

L'invention sera mieux comprise et d'autres avantages de celle-ci apparaitront plus clairement à la lumière de la description qui va suivre d'un mode de réalisation d'une méthode de calibration et d'un robot multiaxe conformes à son principe, donnée uniquement à titre d'exemple et faite en référence aux dessins annexés dans lesquels :

[Fig.1] La Figure 1 est une représentation schématique de principe d'un robot multiaxe conforme à l'invention en cours d'utilisation avec la méthode de l'invention ;

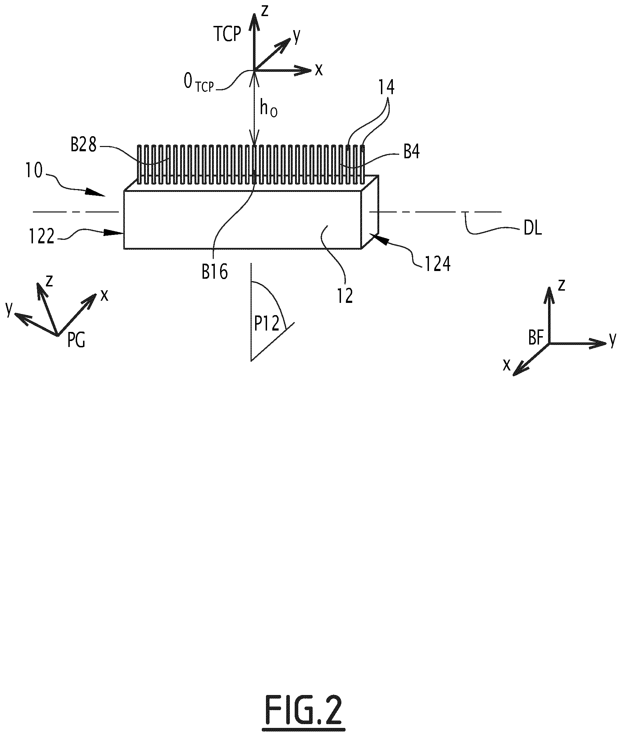

[Fig.2] La Figure 2 est une représentation schématique d'une tête d'impression du robot de la figure 1 et de repères géométriques associés au fonctionnement de ce robot ;

[Fig.3] La Figure 3 est une représentation schématique d'une plaque fixe utilisée dans la méthode de l'invention, lors d'une étape de cette méthode ;

[Fig.4] La Figure 4 est une représentation schématique de la même plaque lors d'une autre étape de l'invention ; et

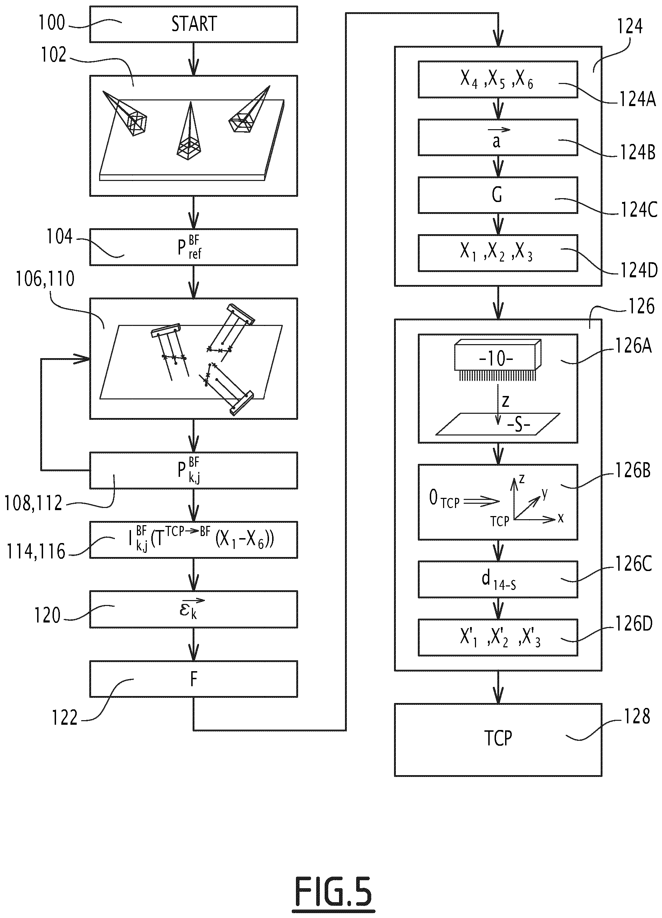

[Fig.5] La Figure 5 est un schéma bloc de la méthode de l'invention.

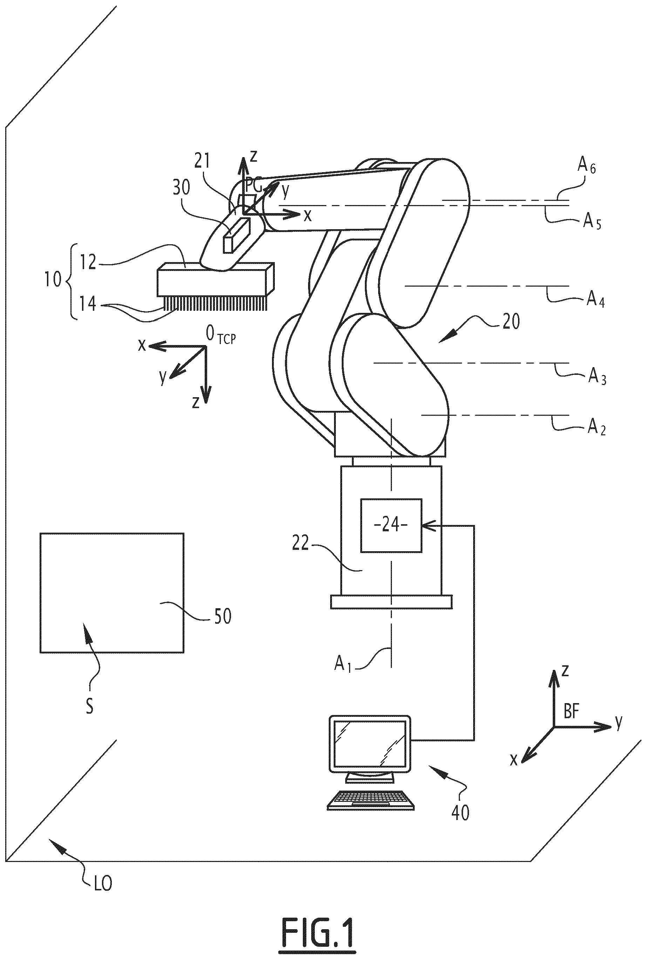

Le robot multiaxe 20 représenté à la figure 1 comprend un bras formé de tronçons articulés entre eux autour de six axes $A_1$ à $A_6$, ainsi qu'un poignet 21 qui forme l'extrémité distale de ce bras. Selon une variante non représentée de l'invention, le poignet peut être articulé par rapport à l'extrémité du bras du robot multiaxe 20, autour d'un septième axe.

Une tête d'impression 10 comprend un corps rigide 12 équipé de buse 14. Cette tête d'impression 10 est montée sur le poignet 21. Elle est destinée à appliquer un produit de revêtement, tel qu'une peinture ou un vernis, sur des objets non représentés, par exemple des carrosseries de véhicule automobile.

Une caméra 30 est montée sur le poignet 21 en étant fixée sur celui-ci par des moyens mécaniques appropriés, par exemple des vis ou des organes de clipsage. La fixation de la caméra 30 sur le poignet 21 est suffisamment solide pour résister aux accélérations subies par la caméra en cours de déplacement par le robot.

Avantageusement, la caméra est une caméra de type CCD ou de type laser avec une ou deux caméra(s) (de type binoculaire et/ou profilomètre).

On considère un repère de base fixe BF, qui est lié à un local LO dans lequel est disposé le robot multiaxe 20.

On considère un repère PG lié au poignet 21. Un modèle du robot permet de passer du repère PG au repère BF, et réciproquement. Ce modèle est réputé connu. A titre d'exemple non limitatif, il peut s'agir du modèle de « Denavit-Hartenberg », ou bien du modèle de « Denavit-Hartenberg Modifié », également nommé modèle de « Khalil Kleinfinger », ou encore du modèle PoE (Product of Exponential)

On considère un repère TCP lié à la tête d'impression 10 et qui est disposé, selon une direction longitudinale LD du corps 12, en regard d'une buse de référence. Ce repère orienté est parfois dénommé « Tool Center Point » en Anglais. L'axe des abscisses x du repère TCP est parallèle à la direction longitudinale LD et on note $O_{TCP}$ son point d'origine, qui est le centre du repère TCP.

Dans l'exemple, la tête d'impression 10 comporte trente-deux buses réparties de part et d'autres d'un plan médian P12 du corps 12 qui contient des axes y et z du repère TCP et auquel est perpendiculaire l'axe x de ce repère. Le plan médian P12 est situé à mi-distance, le long de l'axe des abscisses et de la direction longitudinale LD, entre des extrémités longitudinales 122 et 124 du corps 12.

On désigne par j le rang d'une buse 14 sur la rangé de buses 14, avec j un entier naturel entre 1 et 32. On note Bj une buse de rang j.

L'axe des abscisses du repère TCP est orienté de la buse B32 vers la buse B1.

Dans l'exemple des figures, la buse de référence est la buse B16. Le point d'origine $O_{TCP}$ est donc situé en regard de la buse B16.

L'axe des hauteurs z du repère TCP passe par la buse de référence B16 et est orienté en s'éloignant du corps 12.

En variante, la buse de référence est une autre buse de la rangée de buses 14, le point d'origine $O_{TCP}$ étant alors situé en regard de cette autre buse et l'axe des hauteurs z passant alors par cette autre buse, en étant orienté en s'éloignant de cette autre buse.

Le point d'origine $O_{TCP}$ est situé à une hauteur ho, mesurée parallèlement à l'axe z, à partir du débouché de la buse 14 la plus proche. La hauteur ho est fixée à une valeur comprise entre 2 et 30mm, de préférence égale à 10mm.

Par convention, l'axe des hauteurs z du repère TCP est parallèle à la direction d'éjection des buses 14 et orienté dans la direction d'éjection. L'axe des hauteurs z est aligné sur la direction d'éjection de la buse de référence, ici la buse B16.

L'axe des ordonnées y du repère TCP est perpendiculaire aux axes x et z.

La méthode de calibration de l'invention consiste à déterminer une position orientée du repère TCP lié à la tête d'impression dans le repère PG lié au poignet 21.

Cette méthode est mise en oeuvre dans un calculateur 40 qui est représenté à la figure 1 sous la forme d'un ordinateur et qui communique avec un contrôleur 24 disposé dans une base 22 du robot 20. Le calculateur 40 est programmé pour mettre en oeuvre automatiquement la méthode de l'invention. Le contrôleur 24 et le calculateur 40 forment ensemble une unité électronique de contrôle du robot multiaxe 20.

En variante, les parties 24 et 40 de cette unité de contrôle sont formées d'une seule entité physique, qui peut être intégrée à la base 22.

On considère une surface physique S portée par une plaque 50, disposée de façon fixe à proximité du robot 20, dans le local LO, dans une zone accessible à la tête d'impression 10. Le robot 20 est capable de projeter des gouttelettes de peinture sur la surface S. La surface fixe S est la surface d'une plaque 50 qui sert de support aux gouttelettes de produits de revêtement imprimées.

La méthode de l'invention commence par une étape de démarrage 100 au cours de laquelle le contrôleur 24 et le calculateur 40 sont initialisés.

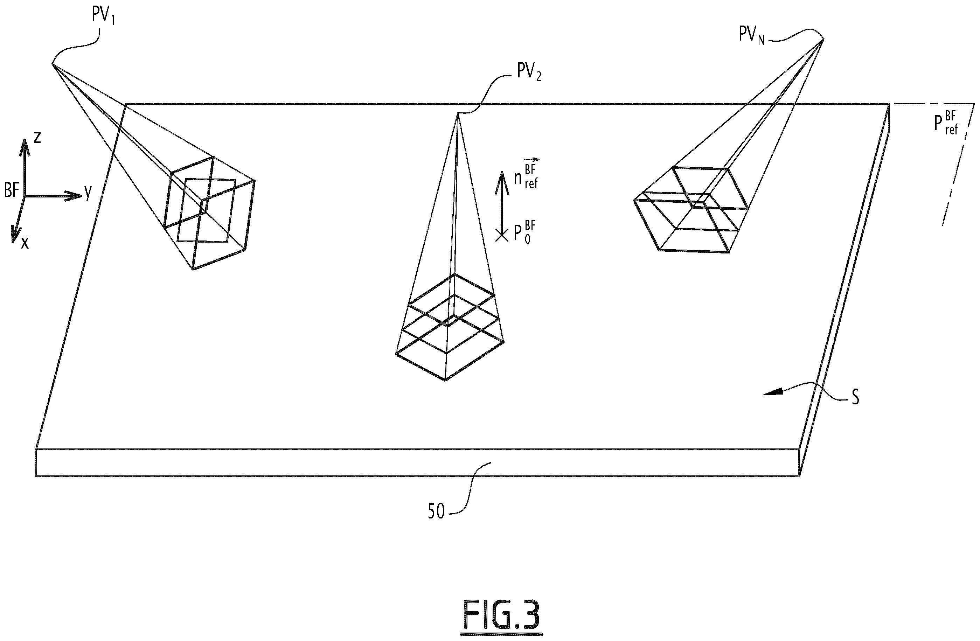

Lors d'une deuxième étape 102 de l'invention, le robot 20 scanne, grâce à sa caméra 30, la surface S qui est fixe dans le repère de base BF. Cette opération de repérage de la surface S a lieu au moyen de plusieurs relevés représentés à la figure 3 par des points de visée $PV_1$, $PV_2$, ... $PV_N$ adoptés successivement par la tête d'impression 10 portée par le bras du robot 20.

Au moins un point de visée est utilisé, ce qui permet de viser au moins un nuage de plusieurs points de la surface fixe S. En pratique, plusieurs points de visée sont utilisés, notamment si la surface fixe S est gauche.

A partir de chaque point de visée $PV_1$, $PV_2$, ... , la caméra 30 est capable de repérer un ou plusieurs nuages de points appartenant à la surface fixe S, pour autant qu'ils soient compris dans son champ de vision, qui est représenté à la figure 3 par un polyèdre à quatre faces.

A partir du ou des nuages de points repérés par la caméra 30 lors de cette étape 102, le calculateur 40 détermine, lors d'une étape 104, un plan moyen, dans le cas où la surface S est plane comme en Fig. 3, passant au mieux par l'ensemble de ces nuages de points. Cette détermination peut avoir lieu, par exemple, par la méthode des moindres carrés. Cette détermination permet de construire un plan géométrique de référence $P_{ref}^{BF}$, représentatif de la surface fixe S et qui est lui-même fixe dans le repère de base BF. Ce plan de référence $P_{ref}^{BF}$ est défini par un point d'origine $O_{ref}^{BF}$ et une normale $\overrightarrow{n_{ref}^{BF}}$. Le plan $P_{ref}^{BF}$ est une surface mathématique de référence, représentative de la surface fixe S et connue du calculateur 40, au terme de l'étape 104.

Dans l'exemple des figures, la surface fixe S est plane et le plan de référence $P_{ref}^{BF}$ est confondu avec la surface S.

En variante, la surface S peut être cylindrique, pyramidale, sphérique ou quelconque. Dans ce cas, l'étape 104 consiste alors à déterminer une forme moyenne associée à la surface S cylindrique, pyramidale, sphérique ou quelconque.

Au terme de l'étape 104, une surface mathématique de référence, représentative de la surface S, est obtenue.

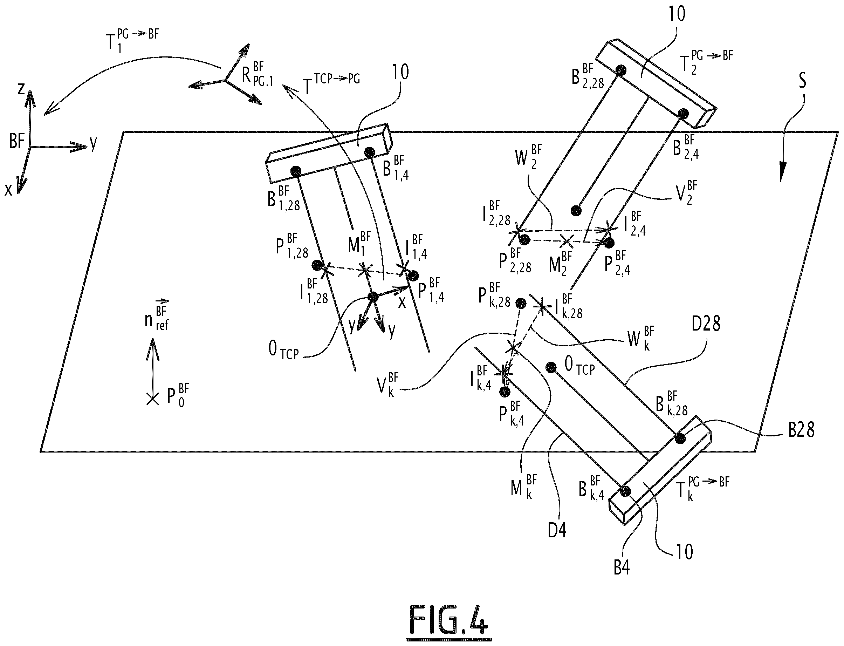

Pour mettre en oeuvre la méthode de l'invention, le robot 20 dispose des coordonnées du repère TCP théorique de la tête d'impression dans le repère du poignet PG. Ces coordonnées du repère TCP théorique sont issues d'un modèle CAO du robot 20 équipé de la tête d'impression 10. Elles sont utilisées lors d'étapes d'acquisition de points par impression de gouttelettes sur la surface S, en amenant la tête d'impression 10 dans différentes positions, représentées à la figure 4 par trois positions.

On note K le nombre de positions d'impression utilisées pour l'acquisition de points, avec K entier naturel strictement supérieur à 1. On note k le numéro d'ordre d'une position utilisée pour l'acquisition de points, avec k en entier naturel entre 1 et K. Chaque position de la tête d'impression 10 correspond à une position du poignet 21 et réciproquement. Ainsi, dans ce qui suit, on parle, pour une position k, de position de la tête d'impression 10 ou de position du poignet 21 ou des deux. Dans chacune de ces positions, la tête d'impression est orientée vers la surface fixe S de la plaque 50.

Selon la méthode de calibrage du robot 20, la tête d'impression est amenée dans une première position par rapport la surface fixe S, avec k égal à 1. Dans une étape 106, le robot active certaines buses 14 de la tête d'impression pour imprimer, sur la surface fixe S, un impact avec chaque buse activée.

On note L le nombre de buses 14 actives dans chaque position de la tête d'impression 10, c'est-à-dire le nombre de gouttes imprimées sur la surface S dans chaque position.

Dans la version de l'invention expliquée en détail ci-après en référence aux figures, L vaut 2, ce qui correspond à la sélection d'un couple de buses. Avantageusement, les buses sélectionnées sont équidistantes de la buse de référence, le long de l'axe des abscisses x du repère TCP. Dans l'exemple, il s'agit des buses B4 et B28 montées sur le corps 12, à égale distance de la buse de référence B16.

En variante un autre couple de buses 14 peut être utilisé, celles-ci étant, de préférence, équidistantes de la buse de référence.

Lors de l'étape 106, la buse B4 imprime un impact sur la surface fixe S et la buse B28 imprime un autre impact sur la surface fixe S.

De façon générale, on note $P_{k,j}^{BF}$ un point caractéristique, dans le repère de base BF, du centre géométrique d'un impact correspondant à une gouttelette déposée sur la surface S par la buse de rang j, lorsque le poignet est dans la position k. On note donc respectivement $P_{k,4}^{BF}$ un point caractéristique de l'impact imprimé par la buse B4 et $P_{k,28}^{BF}$ un point caractéristique de l'impact imprimé par la buse B28, lorsque le poignet est dans la position k.

On définit, pour chaque position k de la tête d'impression 10, un vecteur $V_k^{BF}$ qui s'étend du point caractéristique $P_{k,28}^{BF}$ jusqu'au point caractéristique $P_{k,4}^{BF}$.

On a la relation :

$$V_k^{BF} = P_{k,4}^{BF} - P_{k,28}^{BF} \qquad \text{(équation 1)}$$

Chaque vecteur $V_k^{BF}$ peut être déterminé par le calculateur 40 sur la base des points caractéristiques $P_{k,28}^{BF}$ et $P_{k,4}^{BF}$ qui sont repérés par la caméra 30.

En variante, le nombre L est strictement supérieur à 2, par exemple égal à 5 ou 7, ce qui permet de définir plusieurs vecteurs du type du vecteur $V_k^{BF}$.

Dans une étape 108 de la méthode, les coordonnées des points caractéristiques $P_{1,4}^{BF}$ et $P_{1,28}^{BF}$ sont mesurées par la caméra 30, qui repère les impacts des gouttes déposées sur la surface S, puis le vecteur $V_1^{BF}$ est calculé par le calculateur 40.

Ensuite, le robot multiaxe 20 amène la tête d'impression dans au moins une deuxième position par rapport à la surface fixe S, différente de la première position et dans laquelle la tête d'impression 10 est également orientée vers la surface fixe. Dans la deuxième position du poignet 21 et de la tête d'impression 10, k vaut 2.

Dans une étape 110, le robot active les mêmes buses B4 et B28 de la tête d'impression que lors de l'étape 106 pour imprimer, sur la surface fixe S, respectivement un deuxième impact avec la buse B4 et un autre impact avec la buse B28.

Les autres impacts imprimés avec la buse B28 lorsque la tête d'impression 10 est dans la première position, respectivement dans la deuxième position, peuvent être considérés comme des troisième et quatrièmes impacts.

Dans une étape 112, les coordonnées des points caractéristiques $P_{2,4}^{BF}$ et $P_{2,28}^{BF}$ sont mesurées par la caméra 30, qui repère les impacts des gouttes déposées sur la surface S, puis le vecteur $V_2^{BF}$ est calculé par le calculateur 40.

Si K est strictement supérieur à 2, les étapes 106 et 108 sont répétées autant de fois que nécessaire en utilisant des positions différentes des deux premières positions et différentes entre elles, pour k compris entre 3 et K.

Les positions du poignet 21, qui détermine les positions de la tête d'impression 10, sont choisies de façon arbitraire, pour k compris entre 1 et K, en étant différentes deux à deux.

On note respectivement $B_{k,4}^{BF}$ et $B_{k,28}^{BF}$ la position, dans le repère de base BF, de la buse B4 et de la buse B28, lorsque la tête d'impression 10 est dans la position k.

Dans le repère TCP de la tête d'impression 10, ces deux positions $B_{k,4}^{BF}$ et $B_{k,28}^{BF}$ sont réputées connues, du fait de la définition et de la construction de la tête d'impression 10.

Ces positions peuvent également être exprimées dans le repère de base BF par les deux équations suivantes :

$$B_{k,4}^{BF} = T_k^{PG \to BF} \times T^{TCP \to PG} \times B_{k,4}^{TCP} \qquad \text{(équation 2)}$$

$$B_{k,28}^{BF} = T_k^{PG \to BF} \times T^{TCP \to PG} \times B_{k,28}^{TCP} \qquad \text{(équation 3)}$$

où

- $T_k^{PG \to BF}$ est une matrice de passage du repère du poignet PG vers le repère de base BF lorsque la tête d'impression 10 est dans la position k et
- $T^{TCP \to PG}$ est une matrice de passage du repère TCP vers le repère du poignet PG.

La première matrice de passage $T_k^{PG \to BF}$ est une matrice orthonormée, définie pour chaque position k, alors que la deuxième matrice de passage $T^{TCP \to PG}$ est indépendante de la position k de la tête d'impression 10.

La deuxième matrice de passage peut s'exprimer sous la forme

$$T^{TCP \to PG} =$$
$$\begin{bmatrix} cos(X_5).cos(X_6) & sin(X_4).sin(X_5).cos(X_6) - cos(X_4).sin(X_6) & cos(X_4).sin(X_5).cos(X_6) + sin(X_4).sin(X_6) & X_1 \\ cos(X_5).sin(X_6) & sin(X_4).sin(X_5).sin(X_6) + cos(X_4).cos(X_6) & cos(X_4).sin(X_5).sin(X_6) - sin(X_4).cos(X_6) & X_2 \\ -sin(X_5) & sin(X_4).cos(X_5) & cos(X_4).cos(X_5) & X_3 \\ 0 & 0 & 0 & 1 \end{bmatrix}$$
$$\text{(équation 4)}$$

où les seize coefficients de la deuxième matrice de passage $T^{TCP \to PG}$ sont exprimés en fonction de six paramètres $X_1$ à $X_6$.

Les paramètres $X_1$, $X_2$ et $X_3$ correspondant à une translation du centre du repère TCP lié à la tête d'impression, par rapport au centre du repère PG lié au poignet 21, alors que les paramètres $X_4$, $X_5$ et $X_6$ correspondent à des angles de rotation des axes de ces deux repères les uns par rapport aux autres. Dans le cas de la matrice présentée à l'équation 4, il s'agit des angles de la convention de Roulis-Tangage-Lacet.

En variante, une autre représentation de ces angles peut être employée.

La connaissance de la deuxième matrice $T^{TCP \to PG}$ permet de positionner le repère TCP dans le repère PG lié au poignet, donc de calibrer la tête d'impression, qui forme un outil du robot 20. La méthode de l'invention permet justement de déterminer les paramètres $X_1$ à $X_6$, donc cette deuxième matrice.

On note par ailleurs $I_{k,4}^{BF}$ et $I_{k,28}^{BF}$ les coordonnées, dans le repère de base BF, d'un point d'intersection entre la surface mathématique de référence $P_{ref}^{BF}$ et une droite D4 ou D28 passant par la buse B4, respectivement la buse B28, et parallèle à la direction d'éjection de produit de revêtement à partir de la buse en question. Plus généralement, $I_{k,j}^{BF}$ désigne les coordonnées, dans le repère de base BF, d'un point d'intersection entre la surface mathématique de référence $P_{ref}^{BF}$ et une droite passant par la buse de rang j.

Indépendamment de la position k, la droite D4 ou D28 passant par la buse B4 ou B28 est, par construction du repère TCP, réputée parallèle à l'axe z de ce repère. Chaque position $I_{k,4}^{BF}$ ou $I_{k,28}^{BF}$ est calculée, lors d'une étape 114, par le calculateur 40 comme l'intersection de la droite D4 ou D28, correspondant à la buse B4 ou B28 en position k de la tête d'impression, et de la surface mathématique représentative formée par le plan $P_{ref}^{BF}$.

Dans chaque position k, les coordonnées de chaque point d'intersection $I_{k,4}^{BF}$ ou $I_{k,28}^{BF}$ sont exprimées par le calculateur 40 en fonction de la position $B_{k,4}^{BF}$ ou $B_{k,28}^{BF}$ de la buse B4 ou B28 correspondante et des matrices de passage $T_k^{PG \rightarrow BF}$ et $T^{TCP \rightarrow PG}$. En particulier, les coordonnées de chaque point d'intersection $I_{k,4}^{BF}$ ou $I_{k,28}^{BF}$ dépendent de la deuxième matrice de passage $T^{TCP \rightarrow PG}$, donc de ses paramètres $X_1$ à $X_6$.

En pratique, les coordonnées de chaque point d'intersection $I_{1,4}^{BF}$ ou $I_{1,28}^{BF}$ dans la première position, avec k égal à 1, sont exprimées lors d'une étape 114 et les coordonnées de chaque point d'intersection $I_{2,4}^{BF}$ ou $I_{2,28}^{BF}$ dans la deuxième position, avec k égal à 2, sont exprimées lors d'une étape 116.

L'ordre des étapes 114 et 116 n'est pas limitatif. Elles peuvent également être simultanées.

On définit, pour chaque position k de la tête d'impression 10 ou du poignet 21, un vecteur $W_k^{BF}$ qui s'étend du point d'intersection $I_{k,28}^{BF}$ jusqu'au point d'intersection $I_{k,4}^{BF}$. On a la relation :

$$W_k^{BF} = I_{k,4}^{BF} - I_{k,28}^{BF} \qquad \text{(équation 5)}$$

Chaque vecteur $W_k^{BF}$ peut être calculé par le calculateur 40 et dépend également de la deuxième matrice de passage $T^{TCP \rightarrow PG}$ et de ses paramètres $X_1$ à $X_6$, puisque tel est le cas des points d'intersection $I_{k,4}^{BF}$ et $I_{k,28}^{BF}$.

En théorie, les positions $P_{k,4}^{BF}$ et $I_{k,4}^{BF}$ devraient être identiques, de même que les positions $P_{k,28}^{BF}$ et $I_{k,28}^{BF}$. Donc, les vecteurs $V_k^{BF}$ et $W_k^{BF}$ devraient être superposés. Toutefois, tel n'est pas le cas en pratique, comme le montrent, par exemple, les vecteurs $V_2^{BF}$ et $W_2^{BF}$ ou les vecteurs $V_k^{BF}$ et $W_k^{BF}$ à la figure 4.

Pour chaque position k du poignet 21, c'est-à-dire chaque position de la tête d'impression, on définit un premier écart $\overrightarrow{\varepsilon_k}$ entre les vecteurs $V_k^{BF}$ et $W_k^{BF}$, que le calculateur 40 exprime comme suit, lors d'une étape 120 :

$$\overrightarrow{\varepsilon_k} = W_k^{BF} - V_k^{BF} = \left( I_{k,4}^{BF} - I_{k,28}^{BF} \right) - \left( P_{k,4}^{BF} - P_{k,28}^{BF} \right)$$
$$= \left( T_k^{BF \rightarrow PG} . I_{k,4}^{PG} - T_k^{BF \rightarrow PG} . I_{k,28}^{PG} \right) - \left( T_k^{BF \rightarrow PG} . P_{k,4}^{PG} - T_k^{BF \rightarrow PG} . P_{k,28}^{PG} \right)$$

$$\text{(équation 6)}$$

où

-  $T_k^{PG \rightarrow BF}$ est la première matrice de passage mentionnée ci-dessus ;

- $I_{k,4}^{PG}$ et $I_{k,28}^{PG}$ sont les positions des points d'intersection pour la position k, exprimées dans le repère PG du poignet 21 et

- $P_{k,4}^{PG}$ et $P_{k,28}^{PG}$ sont les positions des centres des impacts des gouttelettes pour la position k, exprimées dans le repère PG du poignet 21

Ceci peut être exprimé sous la forme suivante :

$$\vec{\varepsilon_k} = T_k^{BF \to PG} \cdot \left( \left( I_{k,4}^{PG} - I_{k,28}^{PG} \right) - \left( P_{k,4}^{PG} - P_{k,28}^{PG} \right) \right) \qquad \text{(équation 7)}$$

Comme la matrice $T_k^{BF \to PG}$ est orthonormée, la différence entre les vecteurs $V_k^{BF}$ et $W_k^{BF}$ peut aussi s'exprimer sous la forme suivante :

$$\vec{\varepsilon_k} = \left( I_{k,4}^{PG} - I_{k,28}^{PG} \right) - \left( P_{k,4}^{PG} - P_{k,28}^{PG} \right) \qquad \text{(équation 8)}$$

L'équation 6 est l'expression de l'écart $\vec{\varepsilon_k}$ dans le repère de base BF, alors que l'équation 8 est l'expression de ce même écart dans le repère du poignet PG. La longueur du vecteur écart $\vec{\varepsilon_k}$ est le même dans les deux cas.

Tout comme les coordonnées des points d'intersection $I_{k,4}^{BF}$ ou $I_{k,28}^{BF}$, l'écart $\vec{\varepsilon_k}$ dépend de la deuxième matrice de passage $T^{TCP \to PG}$, donc de ses paramètres $X_1$ à $X_6$.

Chaque écart $\vec{\varepsilon_k}$ peut être considéré comme une erreur due à l'imprécision du positionnement du repère TCP dans le repère PG, erreur qu'il convient de minimiser pour que la mesure dans le repère TCP de la tête d'impression 10 soit la plus juste possible dans le repère de base BF, en jouant sur les paramètres $X_1$ à $X_6$, puisqu'ils interviennent dans la définition de cet écart.

Lors d'une étape suivante 122, une fonction objective F est construite par le calculateur 40 comme étant la somme, pour toutes les positions k, des carrés des écarts déterminés à l'étape 120, sous la forme :

$$F = \sum_{k=1}^{K} \| \vec{\varepsilon_k} \|^2 \qquad \text{(équation 9)}$$

Lors d'une étape 124 postérieure à l'étape 122, également mise en oeuvre par le calculateur 40, la fonction objective F est minimisée, ce qui permet de déterminer les valeurs des paramètres $X_1$ à $X_6$ qui réduisent globalement l'écart $\vec{\varepsilon_k}$ des différentes positions.

L'étape 124 comprend une première sous-étape 124A dans laquelle la fonction objective F est minimisée en jouant uniquement sur les paramètres de rotation $X_4$ à $X_6$. Ceci permet de déterminer des valeurs optimisées de ces trois paramètres.

La minimisation de la fonction objective F lors de la sous-étape 124A a avantageusement lieu par la résolution d'un système d'équations non-linéaire, au moyen de dérivées partielles, à partir d'une position proche, selon la méthode des moindres carrés.

En variante, ce système d'équations non-linéaire peut être résolu par la méthode de Newton, la méthode des gradients, la méthode de Levenberg-Marquardt, la méthode de Newton-Raphson, la méthode de la sécante, une méthode de dichotomie ou une méthode itérative.

Selon encore une autre variante, ce système d'équations non-linéaire peut être résolu, à partir d'une position proche, au moyen d'une discrétisation du domaine des six paramètres X1-X6 autour de la position proche et de l'évaluation de la fonction objective F en fonction de ces paramètres.

Ensuite, le calculateur 40 exprime, dans une deuxième sous-étape 124B, un autre écart $\vec{a_k}$, également dénommé deuxième écart.

Ce deuxième écart $\vec{a_k}$ est différent du premier écart $\vec{\varepsilon_k}$ et il est représentatif d'un décalage entre le centre $O_{TCP}$ du repère TCP et un point milieu $M_k^{BF}$ défini, dans le repère de base BF, entre les points caractéristiques $P_{k,4}^{BF}$ et $P_{k,2}^{BF}$ à mi-distance de ceux-ci.

Lors d'une sous-étape 124B de l'étape 124, l'écart $\vec{a_k}$ est exprimé par le calculateur 40, pour chaque position k du poignet, sous la forme :

$$\vec{b_k} = T^{TCP \to PG} \times \begin{bmatrix} 0 \\ 0 \\ 0 \\ 1 \end{bmatrix} - \frac{1}{2} \times \left( P_{k,4}^{PG} + P_{k,28}^{PG} \right) \qquad \text{(équation 10)}$$

où $\begin{bmatrix} 0 \\ 0 \\ 0 \\ 1 \end{bmatrix}$ est l'expression du point d'origine $O_{TCP}$ du repère TCP dans le repère PG.

Lors d'une sous-étape suivante 124C de l'étape 124, une fonction objective G est construite par le calculateur 40 comme étant la somme, pour toutes les positions k, des carrées des deuxièmes écarts déterminés à la sous-étape 124B, sous la forme :

$$G = \sum_{k=1}^{K} \left\| \vec{b_k} \right\|^2 \qquad \text{(équation 11)}$$

L'étape 124 comprend une sous-étape 124D dans laquelle la fonction objective G est minimisée en jouant uniquement sur les paramètres de translation $X_1$ à $X_3$. Ceci permet de déterminer des valeurs optimisées de ces trois paramètres.

Avantageusement, la minimisation de la fonction objective G a lieu par la résolution d'un système d'équations non-linéaire, en utilisant une deuxième méthode qui peut être la même que celle utilisée pour minimiser la fonction objective F ou une méthode différente. La méthode des moindres carrées est ici particulièrement adaptée. La méthode utilisée est, de préférence, choisie parmi celles énumérées ci-dessus pour la minimisation de la fonction objective F.

Le résultat des deux sous-étapes 124A et 124D est que les paramètres $X_1$ à $X_6$ sont optimisés pour que l'orientation du repère TCP et la position de son point d'origine $O_{TCP}$ soient connues dans le repère du poignet PG avec une bonne précision.

Il est possible de s'en satisfaire et de passer directement à un étape 128 où le calculateur 40 utilise les six paramètres $X_1$-$X_6$ déterminés à l'étape 124 pour construire la deuxième matrice de passage $T^{TCP \to PG}$ et définir la position orientée du repère TCP dans le repère PG.

Dans ce cas, la position du point d'origine $O_{TCP}$ le long de l'axe des hauteurs z du repère TCP n'est pas connue de façon univoque.

Pour connaître cette position, la méthode de l'invention comprend une étape optionnelle 126 de correction de la position du point d'origine $O_{TCP}$ le long de l'axe des hauteurs z du repère TCP. Cette étape 126 est mise en oeuvre entre les étapes 124 et 128.

Lors de cette étape 126, on utilise les coordonnées du repère TCP théorique dans le repère du poignet PG, qui sont connues du robot 20 comme mentionné ci-dessus.

Lors d'une sous-étape 126A de l'étape 126, le robot 20 place la tête d'impression 10 en regard de la surface fixe S, en disposant les axes x et y du repère TCP, défini avec les paramètres $X_1$ à $X_6$ optimisés à l'étape 124, parallèles au plan moyen de la surface fixe S. En d'autre termes, les buses 14 sont orientées perpendiculairement à la surface fixe S. Lors de cette sous-étape 126A, un mouvement de rapprochement de la tête d'impression et de la surface fixe est mis en oeuvre par le robot jusqu'à ce que le point d'origine $O_{TCP}$ du repère TCP soit compris dans la surface fixe S. Ceci est considéré comme atteint lorsque le robot 20 calcule que le point d'origine $O_{TCP}$ appartient au plan de référence $P_{ref}^{BF}$.

Lors d'une sous-étape 126B de l'étape 126, le calculateur 40 projette la position du point d'origine $O_{TCP}$ de ce repère théorique sur la droite des hauteurs du repère TCP défini avec les paramètres $X_1$ à $X_6$ optimisés à l'étape 124.

Il est alors procédé, lors d'une sous-étape de l'étape 126C, à la mesure, selon l'axe des hauteurs z du repère TCP optimisé, d'une distance $d_{14-S}$ entre l'une des buses 14 et la surface fixe S, par exemple la distance entre la sortie de la buse de référence B16 et la surface fixe S. L'étape de mesure peut être effectuée automatiquement, grâce à un dispositif de mesure monté sur la tête d'impression ou sur la surface S, tel qu'un laser. Alternativement, cette mesure peut être effectuée par un opérateur avec un dispositif de mesure indépendant du robot 20, par exemple un réglet, ou un pied à coulisse.

Dans une sous-étape 126D de l'étape 126 suivant la sous-étape 126C, la position du point d'origine $O_{TCP}$ du repère TCP, défini avec les paramètres $X_1$ à $X_6$ optimisés à l'étape 124, est corrigée pour que la distance $d_{14-S}$ devienne égale à une valeur prédéterminée $d_0$, par exemple égale à 10mm. Ceci revient à placer le centre du repère TCP, défini avec les paramètres $X_1$ à $X_6$ optimisés à l'étape 124, à la distance prédéterminée $d_0$ de la surface fixe S, ici 10mm.

On note $d_{corr}$ la distance avec laquelle la position du point d'origine $O_{TCP}$ est corrigée à la sous-étape 126D. On la relation

$$d_{corr} = d_{14\text{-}S} - d_0 \qquad\qquad \text{(équation 12)}$$

Les nouveaux paramètres $X'_1$, $X'_2$ et $X'_3$ qui définissent la position du point d'origine $O_{TCP}$ au terme de l'étape 126 et qui sont calculés à la sous-étape 126D sont définis par la relation suivante :

$$\begin{bmatrix} X'_1 \\ X'_2 \\ X'_3 \\ 1 \end{bmatrix} = \begin{bmatrix} X_1 \\ X_2 \\ X_3 \\ 1 \end{bmatrix} + d_{corr} \times T^{TCP \to PG} \times \begin{bmatrix} 0 \\ 0 \\ 1 \\ 0 \end{bmatrix} \qquad\qquad \text{(équation 13)}$$

Les paramètres $X'_1$, $X'_2$ et $X'_3$ sont alors utilisés, comme nouveaux paramètres $X_1$, $X_2$ et $X_3$ optimisés.

Le changement des paramètres $X_1$ à $X_3$ pour prendre respectivement les valeurs $X'_1$ à $X'_3$ revient à appliquer une translation selon l'axe z du repère TCP, telle que la distance mesurée $d_{14\text{-}S}$ devienne égale à la valeur prédéterminée $d_0$.

Lors d'une étape 128, les six paramètres $X_1$ à $X_6$ déterminés et optimisés à l'étape 124, dont certains $X_1$ à $X_3$ ont éventuellement été corrigés à l'étape 126, sont utilisés dans la deuxième matrice de passage $T^{TCP \to PG}$ pour définir la position orientée du repère TCP dans le repère PG.

Au terme de l'étape 128, la position et l'orientation du repère TCP dans le repère PG sont déterminées avec précision et de façon univoque et le robot multiaxe 20 est calibré pour faire fonctionner de façon optimisée la tête d'impression en la déplaçant avec précision par rapport à la surface fixe S.

L'invention n'est pas limitée au mode de réalisation représenté sur les figures et aux variantes mentionnées ci-dessus.

En variante, le premier écart entre les vecteurs $V_k^{BF}$ et $W_k^{BF}$ peut être exprimé, pour chaque position k du poignet 21, selon l'une des approches suivantes :

$$\vec{\varepsilon_k} = \left( P_{k,4}^{PG} - P_{k,28}^{PG} \right) \wedge \left( I_{k,4}^{PG} - I_{k,28}^{PG} \right) \qquad\qquad \text{(équation 14)}$$

$$\vec{\varepsilon_k} = \frac{\left( P_{k,4}^{PG} - P_{k,28}^{PG} \right) \wedge \left( I_{k,4}^{PG} - I_{k,28}^{PG} \right)}{\left\| P_{k,4}^{PG} - P_{k,28}^{PG} \right\| \times \left\| I_{k,4}^{PG} - I_{k,28}^{PG} \right\|} \qquad\qquad \text{(équation 15)}$$

$$\alpha_k = Arcsin\left( \frac{\left\| \left( P_{k,4}^{PG} - P_{k,28}^{PG} \right) \wedge \left( I_{k,4}^{PG} - I_{k,28}^{PG} \right) \right\|}{\left\| P_{k,4}^{PG} - P_{k,28}^{PG} \right\| \times \left\| I_{k,4}^{PG} - I_{k,28}^{PG} \right\|} \right) > 0 \qquad\qquad \text{(équation 16)}$$

$$\alpha_k = \left( P_{k,4}^{PG} - P_{k,28}^{PG} \right) \cdot \left( I_{k,4}^{PG} - I_{k,28}^{PG} \right) \qquad\qquad \text{(équation 17)}$$

$$\alpha_k = 1 - \frac{\left( P_{k,4}^{PG} - P_{k,28}^{PG} \right) \cdot \left( I_{k,4}^{PG} - I_{k,28}^{PG} \right)}{\left\| P_{k,4}^{PG} - P_{k,28}^{PG} \right\| \times \left\| I_{k,4}^{PG} - I_{k,28}^{PG} \right\|} \qquad\qquad \text{(équation 18)}$$

$$\alpha_k = Arccos\left( \frac{\left| \left( P_{k,4}^{PG} - P_{k,28}^{PG} \right) \cdot \left( I_{k,4}^{PG} - I_{k,28}^{PG} \right) \right|}{\left\| P_{k,4}^{PG} - P_{k,28}^{PG} \right\| \times \left\| I_{k,4}^{PG} - I_{k,28}^{PG} \right\|} \right) \qquad\qquad \text{(équation 19)}$$

Dans le cas des équations 14 et 15, la fonction objective F est la même que celle définie à l'équation 9. Dans les cas des équations 16 à 19, la fonction objective F s'exprime, par exemple, sous la forme :

$$F = \sum_{k2=k1+1}^{K} \alpha_k \qquad\qquad \text{(équation 20)}$$

Les étapes 124, 126 et 128 sont alors adaptées.

Selon une autre variante de l'invention, le deuxième écart $\vec{a_k}$ est exprimé lors de la sous-étape 124B sous la forme :

$$\overrightarrow{a_k} = \frac{1}{2} \times \left( I_{k,4}^{PG} + I_{k,28}^{PG} \right) - \frac{1}{2} \times \left( P_{k,4}^{PG} + P_{k,28}^{PG} \right) \qquad \text{(équation 21)}$$

Le reste de l'étape 124 et les étapes 126 et 128 sont alors adaptés.

Selon une variante non représentée de l'invention, les impacts imprimés lors des étapes 106 et 110 sont utilisés pour calculer un écart défini pour chaque position k du poignet 21, entre les coordonnées d'un point caractéristique $P_{k,l}^{BF}$ et les coordonnées d'un point d'intersection $I_{k,l}^{BF}$ définis comme précédemment. Une fonction objective est alors définie sur la base de cet écart, par exemple comme la somme des carrés de ces écarts pour toutes les positions k, avec k entre 1 et K, et toutes les buses *l*, avec *l* entre 1 et L. Cette fonction est alors minimisée, par exemple avec la méthode des moindres carrés ou une autre des méthodes mentionnées ci-dessus, ce qui permet de déterminer les valeurs optimisées des six paramètres $X_1$-$X_6$ d'une matrice de passage $T^{TCP \to PG}$ définie comme ci-dessus. Dans ce cas, on n'utilise pas de vecteur comparable aux vecteurs $V_k^{BF}$ et $W_k^{BF}$ mentionnés ci-dessus. Dans ce cas, les six paramètres $X_1$-$X_6$ sont optimisés en une étape commune, et non pas en deux étapes successives telles que les sous-étapes 124A et 124D mentionnées ci-dessus. Une étape de correction, du type de l'étape 126, est avantageusement mise en oeuvre.

Selon une autre variante non représentée de l'invention, il est tenu compte de la masse, de la forme, des dimensions et/ou de la vitesse des gouttelettes lors du calcul des points d'intersection. En d'autres termes, les droites D4, D28 et équivalentes peuvent être remplacées par des lignes courbes qui tiennent compte de l'effet balistique de l'éjection du produit de revêtement par les buses 14, qui découle de la masse des gouttelettes, de leur forme, de leurs dimensions et de leur vitesse. Qu'il s'agisse d'une droite ou d'une ligne courbe tenant compte de la balistique, une ligne passant par les buses B4 et/ou B28 ou un autre buse est utilisée pour définir chaque point d'intersection $I_{k,j}^{BF}$.

En variante, l'une au moins des fonctions objectives F et G est construite sans faire intervenir le carré des écarts . Ces fonctions peuvent être égales, par exemple, à la somme des valeurs absolues de ces écarts ou à une autre valeur calculée à partir de ces écarts.

Les étapes 102 et 104 peuvent être mises en oeuvre à tout moment avant les étapes 114 et 116.

Les étapes de l'invention n'ont pas à être répétées à chaque mise en service du robot 20. En effet, lorsque la position orientée du repère TCP est connue dans le repère PG, au terme de l'étape 128, elle est réputée invariante.

Les étapes de la méthode de l'invention sont, de préférence, mises en oeuvre de façon automatique par l'unité de contrôle formé des composants 22 et 40. Les étapes 126A peuvent également être effectuées à la main par un opérateur.

Toute caractéristique décrite pour un mode de réalisation ou une variante dans ce qui précède peut être mise en oeuvre pour les autres modes de réalisation et variantes décrits précédemment, pour autant que techniquement faisable.

## Revendications

1. Méthode de calibration d'un robot multiaxe (20) associé à un repère de base (BF) et équipé d'une caméra (30) et d'une tête d'impression (10) comprenant au moins une première buse (B4), la caméra et la tête d'impression étant montées sur un poignet (21) du robot multiaxe, cette méthode consistant à déterminer une position orientée d'un repère (TCP) lié à la tête d'impression (10) dans un repère (PG) lié au poignet (21), la position orientée du repère lié à la tête d'impression étant définie par six paramètres ($X_1$-$X_6$) d'une matrice ($T^{TCP \to PG}$) de passage entre le repère (TCP) lié à la tête d'impression et le repère (PG) lié au poignet et cette méthode comprenant au moins les étapes suivantes consistant à :

   a) viser (102) avec la caméra (30) au moins un point d'une surface (S) fixe dans le repère de base (BF) ;
   c) amener la tête d'impression dans une première position par rapport à la surface fixe (S), dans laquelle la tête d'impression est orientée vers la surface fixe ;
   d) lorsque la tête d'impression est dans la première position, imprimer (106), sur la surface fixe et au moyen de la première buse (B4), au moins un premier impact ;
   e) mesurer (108) à l'aide de la caméra (30), les coordonnées, dans le repère de base, d'un premier point caractéristique ( $P_{1,4}^{BF}$ ) du premier impact ;
   f) amener la tête d'impression dans au moins une deuxième position par rapport à la surface fixe (S), différente de la première position et dans laquelle la tête d'impression est orientée vers la surface fixe ;
   g) lorsque la tête d'impression est dans la deuxième position, imprimer (110), sur la surface fixe et au moyen de la première buse (B4), au moins un deuxième impact ;

h) mesurer (112), à l'aide de la caméra, les coordonnées, dans le repère de base, d'un deuxième point caractéristique ( $P_{2,4}^{BF}$ ) du deuxième impact ;

**caractérisée en ce que** la méthode comprend également au moins les étapes suivantes consistant à :

b) déterminer (104), à partir du résultat de l'étape a), une surface mathématique ( $P_{ref}^{BF}$ ) représentative de la surface fixe ;

i) exprimer (114), dans le repère de base (BF) et avec la matrice de passage ($T^{TCP \to PG}$), les coordonnées d'un premier point d'intersection ( $I_{1,4}^{BF}$ ) entre la surface mathématique ( $P_{ref}^{BF}$ ) représentative de la surface fixe (S) et une ligne (D4) passant par la première buse (B4) dans la première position ;

j) exprimer (116), dans le repère de base BF et avec la matrice de passage ($T^{TCP \to PG}$), les coordonnées d'un deuxième point d'intersection ( $I_{2,4}^{BF}$ ) entre la surface mathématique représentative de la surface fixe et la ligne passant par la première buse (B4) dans la deuxième position ;

k) exprimer (120), pour chaque position de la tête d'impression et chaque impact, un écart ($\vec{\varepsilon_k}$) basé sur les coordonnés de son point caractéristique ( $P_{k,j}^{BF}$ ) et les coordonnées de son point d'intersection (IBF)$_{k,j}$ ;

l) construire (122) une fonction objective (F) dont les variables sont les écarts ($\vec{\varepsilon_k}$) exprimés à l'étape k) ;

m) déterminer (124) des valeurs des six paramètres ($X_1$-$X_6$) de la matrice de passage ($T^{TCP \to PG}$) qui minimisent la fonction objective (F) ;

n) utiliser (128) les six paramètres ($X_1$-$X_6$) déterminés à l'étape m) pour définir la position orientée du repère (TCP) lié à la tête d'impression (10) dans le repère lié au poignet (21).

2. Méthode selon la revendication 1, mise en oeuvre avec une tête d'impression qui comprend au moins une deuxième buse (B28), **caractérisée en ce que**

- lors de l'étape d) on imprime, sur la surface fixe (S) et au moyen de la deuxième buse (B28), un troisième impact;
- lors de l'étape e) on mesure, à l'aide de la caméra (30), les coordonnées, dans le repère de base (BF), d'un troisième point caractéristique ( $P_{1,28}^{BF}$ ) du troisième impact ;
- lors de l'étape g), on imprime, sur la surface fixe et au moyen de la deuxième buse (B28), un quatrième impact ;
- lors de l'étape h), on mesure, à l'aide de la caméra, les coordonnées, dans le repère de base, d'un quatrième point caractéristique ( $P_{2,28}^{BF}$ ) du quatrième impact ;
- lors de l'étape i) on exprime, dans le repère de base (BF) et avec la matrice de passage ($T^{TCP \to PG}$), les coordonnées d'un troisième point ( $I_{1,28}^{BF}$ ) d'intersection entre la surface mathématique ( $P_{ref}^{BF}$ ) représentative de la surface fixe(S) et une ligne (D28) passant par la deuxième buse dans la première position ;
- lors de l'étape j), on exprime, dans le repère de base (BF) et avec la matrice de passage ($T^{TCP \to PG}$), les coordonnées d'un quatrième point ( $I_{2,28}^{BF}$ ) d'intersection entre la surface mathématique représentative de la surface fixe et la ligne (D28) passant par la deuxième buse dans la deuxième position.

3. Méthode selon la revendication 2, **caractérisée en ce qu'**un axe (z) du repère (TCP) lié à la tête d'impression (10) est parallèle aux directions d'éjection des deux buses (B4, B28) de la tête d'impression et **en ce que** les deux buses sont disposées de part et d'autre et à égale distance d'une buse de référence (B16) de la tête d'impression par laquelle passe l'axe (z) du repère lié à la tête d'impression.

4. Méthode selon l'une des revendications précédentes, **caractérisée en ce que** les six paramètres ($X_1$-$X_3$) de la matrice de passage ($T^{TCP \to PG}$) se décomposent en

- trois paramètres de translation ($X_1$-$X_3$) et
- trois paramètres de rotation ($X_4$-$X_6$)

**en ce que** l'étape m) comprend des sous étapes consistant à :

m1) déterminer (124A) les trois paramètres de rotation ($X_4$-$X_6$) en minimisant la fonction objective (F) construite à l'étape I)

m2) exprimer (124B), pour chaque position de la tête d'impression et chaque buse (B4, B28), un autre écart ($\overrightarrow{a_k}$) basé sur les coordonnés de son point caractéristique ($P_{k,j}^{BF}$) et les coordonnées de son point d'intersection ($I_{k,j}^{BF}$), l'autre écart étant différent de celui exprimé à l'étape k) ;

m3) construire (124C) une autre fonction objective (G), dont les variables sont les écarts exprimés à la sous-étape m2) ;

m4) déterminer (124D) les trois paramètres de translation ($X_1$-$X_3$), en minimisant la fonction objective (G) construite à l'étape m3).

**5.** Méthode selon les revendications 3 et 4, **caractérisée en ce que** l'autre écart s'exprime sous la forme

$$\overrightarrow{a_k} = T^{TCP \to PG} \times \begin{bmatrix} 0 \\ 0 \\ 0 \\ 1 \end{bmatrix} - \frac{1}{2} \times \left( P_{k,j}^{BF} + P_{k,j}^{BF} \right)$$

ou sous la forme

$$\overrightarrow{a_k} = \frac{1}{2} \times \left( I_{k,j}^{BF} + I_{k,j'}^{BF} \right) - \frac{1}{2} \times \left( P_{k,j}^{BF} + P_{k,j'}^{BF} \right)$$

où

- $\overrightarrow{a_k}$ est l'autre écart exprimé à la sous-étape m2) pour la position k

- $I_{k,j}^{BF}$ sont les coordonnées, dans le repère de base (BF), du point d'intersection de la buse de rang j pour la position k

- $P_{k,j}^{BF}$ sont les coordonnées, dans le repère de base (BF), du point caractéristique de l'impact imprimé avec la buse de rang j pour la position k

- $T^{TCP \to PG}$ est la matrice de passage du repère (TCP) lié à la tête d'impression (10) au repère (PG) lié au poignet (21) ;

- $\begin{bmatrix} 0 \\ 0 \\ 0 \\ 1 \end{bmatrix}$ est l'expression du point d'origine ($O_{TCP}$) du repère lié à la tête d'impression dans le repère lié à la tête d'impression.

**6.** Méthode selon l'une des revendications 4 et 5, **caractérisée en ce qu'**elle comprend une étape (126) de correction du point d'origine ($O_{TCP}$) du repère (TCP) lié à la tête d'impression (10), mise en oeuvre entre les étapes m) et n) et consistant à :

p1) placer (126A) la tête d'impression (10) en regard de la surface fixe (S) et perpendiculairement à la surface fixe, dans une position où le point d'origine ($O_{TCP}$) du repère (TCP) lié à la tête d'impression (10) est dans la surface mathématique ($P_{ref}^{BF}$) représentative de la surface fixe (S);

p2) mesurer (126C) une distance ($d_{14\text{-}S}$) entre la tête d'impression (10) et la surface fixe (S) ;

p3) corriger (126D) les paramètres de translation ($X_1$-$X_3$) en appliquant une translation selon l'axe (z) des hauteurs du repère (TCP) lié à la tête d'impression, de telle sorte que la distance mesurée à l'étape p2) soit égale à une distance prédéterminée ($d_0$).

**7.** Méthode selon l'une des revendications précédentes, **caractérisée en ce que** les étapes c) et d) sont mises en oeuvre avant l'étape e) et les étapes f) et g) sont mises en oeuvre avant l'étape h).

8. Méthode selon l'une des revendications précédentes, **caractérisée en ce que** les premières et deuxièmes positions sont sélectionnées de façon arbitraire.

9. Méthode selon l'une des revendications précédentes, **caractérisée en ce que** la ou chaque fonction objective (F, G) est la somme des carrés des écarts exprimés à l'étape k) et, éventuellement, à l'étape m2).

10. Méthode selon l'une des revendications précédentes, **caractérisée en ce que** la détermination des valeurs des six paramètres (X1-X6) à l'étape m) est effectuée par résolution d'un système d'équations non-linéaire au moyen de dérivées partielles, à partir d'une position proche, selon la méthode des moindres carrés, la méthode de Newton, la méthode des gradients, la méthode de Levenberg-Marquardt, la méthode de Newton-Raphson, la méthode de la sécante, une méthode de dichotomie, une méthode itérative ou, à partir d'une position proche, au moyen d'une discrétisation du domaine des six paramètres (X1-X6) autour de la position proche et de l'évaluation de la fonction objective (F, G).

11. Méthode selon l'une des revendications précédentes, **caractérisée en ce que**, lors de l'étape i) et/ou j), l'expression des coordonnées des points d'intersection ($I_{1,4}^{BF}$) et ($I_{2,4}^{BF}$) est obtenue par l'expression de l'intersection entre la surface mathématique ($P_{ref}^{BF}$) représentative de la surface fixe (S) et une ligne balistique issue de la buse (B4, B28) correspondante.

12. Robot multiaxe associé à un repère de base (BF) et équipé d'une caméra (30) et d'une tête d'impression (10), la tête d'impression comprenant au moins une première buse (B4), la caméra et la tête d'impression étant montées sur un poignet (21) du robot multiaxe, **caractérisé en ce qu'**il comprend une unité électronique de commande (24, 40) configurée pour mettre en oeuvre une méthode de calibration selon l'une des revendications précédentes.

## FIG.1

FIG.2

FIG.3

EP 4 566 767 A1

$$\underline{FIG.4}$$

100 — START

102

104 — $P_{ref}^{BF}$

106,110

$P_{k,j}^{BF}$

108,112

114,116 — $I_{k,j}^{BF}(T^{TCP \to BF}(X_1 - X_6))$

120 — $\vec{\varepsilon}_k$

122 — F

124

124A — $X_4, X_5, X_6$

124B — $\vec{a}$

124C — G

124D — $X_1, X_2, X_3$

126

126A — -10-

$z$

-S-

126B — $0_{TCP} \Rightarrow$ $\begin{array}{c} z \\ \nearrow y \\ TCP \longrightarrow x \end{array}$

126C — $d_{14-S}$

126D — $X'_1, X'_2, X'_3$

128 — TCP

## FIG.5

Europäisches
Patentamt

European
Patent Office

Office européen
des brevets

## RAPPORT DE RECHERCHE EUROPEENNE

Numéro de la demande

EP 24 21 7354

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | FR 3 061 076 A1 (SAFRAN NACELLES [FR]) 29 juin 2018 (2018-06-29) * abrégé * * figures 1, 2 * * page 4, ligne 23 - page 6, ligne 10 * ----- | 1-12 | INV. B25J9/16 |
| A | CN 109 483 516 B (UNIV ZHEJIANG) 5 juin 2020 (2020-06-05) * abrégé * * figures 1, 2 * * alinéas [0074] - [0119] * ----- | 1-12 | |
| A | ZHANG YAQIN ET AL: "An accurate hand-eye calibration algorithm with global optimization", PROCEEDINGS OF SPIE; [PROCEEDINGS OF SPIE ISSN 0277-786X VOLUME 10524], SPIE, US, vol. 10827, 24 juillet 2018 (2018-07-24), pages 108270Z-108270Z, XP060108119, DOI: 10.1117/12.2500972 ISBN: 978-1-5106-1533-5 * abrégé * * figure 1 * * section 2 * ----- | 1-12 | |
| A | EP 4 159 386 A1 (CHEVRON DIDIER [FR] ET AL) 5 avril 2023 (2023-04-05) * abrégé * * figure 6 * * alinéas [0017] - [0110] * ----- | 1-12 | DOMAINES TECHNIQUES RECHERCHES (IPC) B25J G05B B41J |

-/--

Le présent rapport a été établi pour toutes les revendications

| Lieu de la recherche | Date d'achèvement de la recherche | Examinateur |
|---|---|---|
| La Haye | 28 mars 2025 | Hageman, Elodie |

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 24 21 7354

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | Park Allen: "Machine-vision assisted 3D printing", , 23 septembre 2016 (2016-09-23), XP093185266, Extrait de l'Internet: URL:https://dspace.mit.edu/handle/1721.1/1 13162 [extrait le 2024-07-12] * figures 3-5-3-7 * * Chapitre 3 * ----- | 1-12 | |
| A | US 2022/258352 A1 (HE YIN ZENG [CN] ET AL) 18 août 2022 (2022-08-18) * abrégé * * figure 1 * * alinéas [0074] - [0113] * ----- | 1-12 | |
| | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| La Haye | 28 mars 2025 | Hageman, Elodie |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

    ...............................................................................

& : membre de la même famille, document correspondant

EPO FORM 1503 03.82 (P04C02)

page 2 de 2

## ANNEXE AU RAPPORT DE RECHERCHE EUROPEENNE
## RELATIF A LA DEMANDE DE BREVET EUROPEEN NO.

EP 24 21 7354

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-03-2025

| Document brevet cité au rapport de recherche | | Date de publication | Membre(s) de la famille de brevet(s) | | Date de publication |
|---|---|---|---|---|---|
| FR 3061076 | A1 | 29-06-2018 | AUCUN | | |
| CN 109483516 | B | 05-06-2020 | AUCUN | | |
| EP 4159386 | A1 | 05-04-2023 | CN | 115900737 A | 04-04-2023 |
| | | | EP | 4159386 A1 | 05-04-2023 |
| | | | FR | 3127428 A1 | 31-03-2023 |
| | | | JP | 2023051848 A | 11-04-2023 |
| | | | KR | 20230047317 A | 07-04-2023 |
| | | | US | 2023103030 A1 | 30-03-2023 |
| US 2022258352 | A1 | 18-08-2022 | CN | 114174006 A | 11-03-2022 |
| | | | EP | 3988254 A1 | 27-04-2022 |
| | | | US | 2022258352 A1 | 18-08-2022 |
| | | | WO | 2021012122 A1 | 28-01-2021 |

EPO FORM P0460

Pour tout renseignement concernant cette annexe : voir Journal Officiel de l'Office européen des brevets, No.12/82

**EP 4 566 767 A1**

**RÉFÉRENCES CITÉES DANS LA DESCRIPTION**

**Documents brevets cités dans la description**

- FR 3061076 A1
- DE 102016204123 A1